# EUROPÄISCHE PATENTSCHRIFT

(11) **EP 2 706 421 B1**
(45) Veröffentlichungstag und Bekanntmachung des Hinweises auf die Patenterteilung: **27.05.2015**
(21) Anmeldenummer: 12183797.5
(22) Anmeldetag: 11.09.2012
(51) Int. Cl.: G05B 19/042, G06F 9/45, G06F 9/44

(54) **Verfahren zur rechnergestützten Erzeugung mindestens eines Teils eines ausführbaren Steuerungsprogramms**
Method for the computer-controlled generation of at least a portion of an executable control program
Procédé de génération assistée par ordinateur d'au moins une partie d'un programme de commande exécutable

(43) Veröffentlichungstag der Anmeldung: 12.03.2014
(73) Patentinhaber: dSPACE digital signal processing and control engineering GmbH, 33102 Paderborn (DE)
(72) Erfinder: Fischer, Karsten, 33098 Paderborn (DE); Pietzsch, Torsten, 33100 Paderborn (DE); Mair, Michael, 33098 Paderborn (DE); Trautmann, Wolfgang, 33012 Paderborn (DE)

(56) Entgegenhaltungen:
- WO-A1-00/73885
- US-A1- 2004 148 151
- US-A1- 2010 192 122

## Beschreibung

Die Erfindung betrifft ein Verfahren zur rechnergestützten Erzeugung mindestens eines Teils eines ausführbaren Steuerungsprogramms, insbesondere eines Mess-, Steuer, Regel- und/oder Kalibrierungsprogramms, zur Steuerung eines Steuerungssystems mit mindestens einer elektronischen Rechnereinheit, wobei die Funktionalität des Steuerungsprogramms zumindest teilweise in mindestens einem grafischen Modell beschrieben ist und das grafische Modell in Hierarchiestufen in Submodelle gegliedert ist, wobei ein Submodell einer Hierarchiestufe geschachtelt in Submodelle einer tieferen Hierarchiestufe gegliedert sein kann, wobei Werte für Optionen für die Übersetzung des grafischen Modells in Programmcode vorgegeben werden und unter Berücksichtigung der Werte der Optionen aus dem Modell rechnergestützt Programmcode erzeugt wird und der Programmcode mit in das ausführbare Steuerungsprogramm übersetzt wird.

Verfahren der vorgenannten Art sind seit einigen Jahren in der Entwicklung von Steuerungssystemen weit verbreitet und etabliert, da sie eine sichere und komfortable automatisierte Codeerzeugung für meist echtzeitfähige Steuerungssysteme ermöglichen (z. B. Seriencode-Generierung mit TargetLink). Als Rechnereinheiten werden häufig - je nach Komplexitätsgrad des Steuerungssystems ein oder mehrere, teilweise oder auch vollständig vernetzte - Steuergeräte eingesetzt, die üblicherweise entsprechende I/O-Schnittstellen aufweisen, um Zustandsgrößen eines zu beeinflussenden physikalisch-technischen Systems messtechnisch erfassen zu können, und um auf das physikalisch-technische System durch Ausgabe bestimmter Stellgrößen Einfluss nehmen zu können.

Der Vorteil derartiger Verfahren besteht darin, dass auf einer abstrakten Ebene anhand eines grafischen Modells die gewünschte Funktionalität des Steuerungsprogramms modelliert werden kann, beispielsweise in Form von Blockschaltbildern, die auf sehr einfache Art und Weise die Darstellung von selbst komplizierten mathematischen und strukturellen Zusammenhängen gestatten. Selbst I/O-Funktionalitäten lassen sich im Rahmen eines solchen grafischen Modells darstellen und modellieren. Durch Einsatz der in Rede stehenden Verfahren ist es dann grundsätzlich möglich, für die sehr spezielle Hardware der elektrischen Rechnereinheit einen Programmcode zu erzeugen, der in ein ausführbares Steuerungsprogramm übersetzt - also kompiliert - wird und auf dieser speziellen Zielhardware ausgeführt und erprobt werden kann. Die fehleranfällige manuelle Umsetzung einer Steuerungsidee in Programmcode und somit letztendlich in das Steuerungsprogramm entfällt, wodurch erst die heute üblichen schnellen Entwicklungszyklen beispielsweise im Rahmen des Rapid-Control-Prototyping oder der Hardware-in-the-Loop-Simulationen möglich geworden sind.

Grafische Modelle, insbesondere in Form von Blockschaltbildern, eignen sich in besonderer Weise dazu, eine Funktionalität in verschiedene Modellteile zu untergliedern. Modellteile innerhalb bzw. auf einer Hierarchiestufe ergänzen sich in dieser Hierarchiestufe zu einem grafischen Gesamtmodell, wobei diese Modellteile - allein aufgrund der Komplexität vieler grafischer Modelle - von verschiedenen Entwicklern oder Entwicklergruppen bearbeitet werden. Bei einem Fahrzeug kann es sich bei den Modellteilen beispielsweise um die Modelle von Antriebsaggregat, Antriebsstrang und Fahrzeugaufbau handeln, wobei jeder dieser Modellteile in weitere Modellteile - Submodelle - zerfallen kann.

Typischerweise kann ein grafisches Modell nicht nur innerhalb bzw. auf einer Hierarchiestufe in Modellteile gegliedert sein - also "horizontal" in sich gegenseitig ergänzende Modellteile. Vielmehr kann das grafische Modell einer Hierarchiestufe bzw. können die Submodelle in dieser Hierarchiestufe jeweils in Submodelle gegliedert bzw. in Submodelle verschiedener Hierarchiestufe geschachtelt werden, wobei die Submodelle in einer niedrigeren Hierarchiestufe die Funktionalität des darüber liegenden Submodells der nächst höheren Hierarchiestufe oft nur in einem anderen Detaillierungsgrad darstellen. Geschachtelte Submodelle eines grafischen Modells auf verschiedenen Hierarchiestufen sind demnach "vertikal" aufgefächert und zeigen ein und dieselbe Funktionalität in unterschiedlicher Detaillierung. Auch Submodelle auf verschiedenen Hierarchiestufen eignen sich dazu, arbeitsteilig von verschiedenen Entwicklern gleichzeitig bearbeitet zu werden.

Es ist ohne weiteres nachvollziehbar, dass es zwischen den verschiedenen Teilen bzw. geschachtelten Submodellen eines grafischen Modells Abhängigkeiten gibt, die sowohl die Erzeugung von Programmcode aus den Teilen bzw. Submodellen des grafischen Modells betreffen wie auch bei der weiteren Übersetzung des Programmcodes in das ausführbare Steuerungsprogramm zu berücksichtigen sind.

Aus der EP 1 522 910 A1 ist beispielsweise ein Verfahren zur Erzeugung eines ausführbaren Steuerungsprogramms bekannt, bei dem es auf einfache Art und Weise möglich ist, die Konfiguration von mathematisch abstrakten Anteilen des grafischen Modells unabhängig von hardwareabhängigen Einstellungen der Zielhardware zu konfigurieren.

Aus der EP 2 330 469 A1 ist ein weiteres Verfahren zur Erzeugung eines ausführbaren Steuerungsprogramms zur Steuerung eines Steuerungssystems bekannt, bei dem eine konfliktfreie Erzeugung von Programmcode durch eine geeignete Referenzierung zwischen Datenelementen in einer Datenelementsammlung und von Teilen des grafischen Modells gelingt.

Aus der WO 00/73885 ist die automatischen Erzeugung von Steuerungsprogrammen aus graphischen Modellen bekannt, wobei Parameter auf Submodelle verschiedener Hierarchiestufen ausgedehnt werden können.

Der nachfolgend dargestellten Erfindung liegt die Erkenntnis zu Grunde, dass die Übertragung des grafischen Modells in Programmcode aufgrund der Abhängigkeiten zwischen Submodellen problematisch sein kann, insbesondere dann, wenn Werte für Optionen für die Übersetzung des grafischen Modells in Programmcode vorgegeben werden, die die Übersetzung des Programmcodes in das ausführbare Steuerungsprogramm beeinflussen und diese vorgegebenen Werte beispielsweise in geschachtelten Submodellen unterschiedlich sind. In dieser Situation stellt sich die Frage, wie unter Umständen mehrdeutige Options-Vorgaben - bei denen es sich beispielsweise um Compileranweisungen handelt - aufgelöst werden können, wie mit logisch widersprüchlichen Vorgaben umzugehen ist und wie mögliche Konfliktfälle aufgelöst werden können.

Aufgabe der vorliegenden Erfindung ist es daher, ein Verfahren zur rechnergestützten Erzeugen mindestens eines Teils eines ausführbaren Steuerungsprogramms anzugeben, bei dem Werte für Optionen für die Übersetzung des grafischen Modells im Programmcode und in das ausführbare Steuerungsprogramm granular vorgebbar sind bei automatischer Vermeidung kollidierender Vorgaben von Werten für diese Optionen.

Das erfindungsgemäße Verfahren, bei dem die zuvor hergeleitete und aufgezeigte Aufgabe gelöst ist, ist zunächst und im Wesentlichen dadurch gekennzeichnet, dass Werte für Optionen für die Übersetzung des grafischen Modells für wenigstens zwei geschachtelte Submodelle verschiedener Hierarchiestufen vorgegeben werden, und die Werte für die Optionen bei der rechnergestützten Erzeugung von Programmcode für jedes Submodell berücksichtigt werden, wobei eine nicht mit einem Wert versehene Option des Submodells auf der niedrigeren Hierarchiestufe den Wert der korrespondierenden Option des Submodells auf der höheren Hierarchiestufe übernimmt.

Das erfindungsgemäße Verfahren zeichnet sich also dadurch aus, dass überhaupt die Möglichkeit geschaffen wird, Optionen für die Übersetzung des grafischen Modells für wenigstens zwei geschachtelte Submodelle verschiedener Hierarchiestufen vorzugeben, wobei erfindungsgemäß ferner vorgesehen ist, dass ein nicht vorgegebener Wert für eine Option zur Programmcodeerzeugung und -übersetzung in dem Submodell einer niedrigeren Hierarchiestufe durch eine entsprechende Wertevorgabe für diese Option aus dem Submodell einer höheren Hierarchiestufe übernommen wird. Auf diese Weise wird erreicht, dass für Submodelle auf niedrigeren Hierarchiestufen die gleichen Optionen bzw. die gleichen Werte für Optionen für die Übersetzung des grafischen Modells verwendet werden, wie in Submodellen auf höheren Hierarchiestufen, wodurch eine einheitliche Handhabung sichergestellt ist, jedenfalls für den Fall, dass entsprechende Werte für Optionen für Submodelle niedrigerer Hierarchiestufen nicht (lokal) gesetzt worden sind. Beispiele für derartige Optionen sind Optimierungsanweisungen an den Übersetzer (Compiler) - Optimierung des Codes für eine schnelle Laufzeit oder für einen geringen Speicherbedarf -, die Vorgabe des Wertes für die Bitbreite des Steuerungssystems, Vorgaben hinsichtlich des Speicherlayouts, Vorgaben für sicherheitskritische Optionen - Optimierungen zulässig oder unzulässig - usw.

Gemäß einer vorteilhaften Weiterbildung des rechnergestützten Verfahrens zur Erzeugung zumindest eines Teils eines ausführbaren Steuerungsprogramms ist vorgesehen, dass ein vorgegebener Wert für eine Option auf der niedrigeren Hierarchiestufe Vorrang hat vor einem vorgegebenen Wert für die korrespondierende Option auf der höheren Hierarchiestufe, wobei wiederum Hierarchiestufen geschachtelter Submodelle gemeint sind. Für den Fall, dass ein Wert für eine Option auf der niedrigeren Hierarchiestufe gesetzt ist, überdeckt dieser die auf der höheren Hierarchiestufe gesetzte Option, so dass solch ein lokal gesetzter Wert Vorrang hat vor dem auf übergeordneter Hierarchiestufe gesetzten Wert für die gleiche Option. Dieses Verhalten ermöglicht es beispielsweise, Optimierungsoptionen in geschachtelten Submodellen unterschiedlich zu setzen, wodurch eine gewollte Granularität in der Vorgabe von Werten für Optionen herstellbar ist.

In einer weiteren bevorzugten Ausgestaltung des Verfahrens ist vorgesehen, dass für einen vorgegebenen Wert für eine Option für ein Submodell auf einer Hierarchiestufe die Anzahl der niedrigeren Hierarchiestufen angegeben werden kann und angegeben wird, in denen der vorgegebene Wert für die betreffende Option Vorrang hat. Durch diese Maßnahme ist praktisch die Reichweite einer Wertvorgabe für eine Option einstellbar. Insbesondere ist vorgesehen, dass nach dieser gewählten Anzahl von niedrigeren Hierarchiestufen der Wert für die betroffenen Option wieder den Wert annimmt, der in der höheren Hierarchiestufe für diese Option gesetzt worden ist. Wird als Anzahl der niedrigeren Hierarchiestufen für eine Vorgabe der Wert Null gewählt, dann bedeutet dies, dass der Wert für die betreffende Option nur auf dieser einen Hierarchiestufe gültig ist, in der der Wert gesetzt worden ist. Gemäß der bevorzugten Verhaltensweise weist dann schon der Wert in der nächstniedrigeren Hierarchiestufe des geschachtelten Submodells wieder den Wert für die betreffende Option auf, der in der höheren Hierarchiestufe des geschachtelten Submodell gesetzt worden ist. Auch besteht in der nächstniedrigeren Hierarchiestufe wieder die Möglichkeit der lokalen Vorgabe eines Wertes für die betreffende Option.

Gemäß einer weiteren vorteilhaften Ausgestaltung sieht das erfindungsgemäße Verfahren vor, dass ein vorgegebener Wert für eine Option für ein Submodell auf einer Hierarchiestufe und/oder für eine Option für das Modell auf höchster Hierarchiestufe als unveränderlich gekennzeichnet wird - also als Konstant-Option - so dass der Wert für diese Option auf einer niedrigeren Hierarchiestufe nicht mehr verändert wird, insbesondere auch dann nicht, wenn auf einer niedrigeren Hierarchiestufe ein anderer Wert für die korrespondierende Option festgesetzt wird. Dies ist beispielsweise für solche Optionen sinnvoll, die Hierarchiestufen übergreifend einheitlich gesetzt sein müssen. Wenn das Steuerungssystem beispielsweise nur über eine einzige elektronische Rechnereinheit mit einer einzigen bekannten Bitbreite verfügt, ermöglicht die erfindungsgemäße Ausgestaltung beispielsweise die Vorgabe der Bitbreite des zu generierenden Codes für alle Submodelle auf allen Hierarchiestufen einheitlich.

Gemäß einer weiteren vorteilhaften Weiterentwicklung des Verfahrens wird eine Default-Option für die Übersetzung des grafischen Modells in Programmcode bestimmt und ein Default-Wert vorgegeben, der insbesondere als Vorgabewert für die korrespondierende Option des Modells auf höchster Hierarchiestufe verwendet wird, falls der Wert der korrespondierenden Option im grafischen Modell nicht bestimmt ist. Durch diese Maßnahme kann verhindert werden, dass erforderliche Optionen überhaupt nicht berücksichtigt werden, und es kann ebenfalls vermieden werden, dass nicht gesetzte Werte für diese Optionen ungesetzt bleiben, was möglicherweise später ein erfolgreiches Generieren des Programmcodes oder aber ein erfolgreiches Übersetzen des Programmcodes in das Steuerungsprogramm verhindern würde.

Um andererseits von dem Verwender des Verfahrens die Vorgabe eines Wertes für eine Option zu erzwingen, ist bei einer vorteilhaften Ausgestaltung des Verfahrens vorgesehen, dass mindestens eine Option für ein Submodell auf einer Hierarchiestufe und/oder mindestens eine Option für das Modell auf höchster Hierarchiestufe und/oder mindestens eine Default-Option markiert wird als eine auf einer niedrigeren Hierarchiestufe mit einem Wert zu versehende Option. Insbesondere ist vorgesehen, dass eine Fehlermeldung oder Warnung ausgegeben wird, wenn die zugehörige Option zum Zeitpunkt der Übersetzung des grafischen Modells im Programmcode nicht in einer niedrigeren Hierarchiestufe mit einem Wert belegt worden ist. Bei einer Fehlermeldung bricht der Übersetzungsprozess ab. Bei der Ausgabe einer Warnung wird die Übersetzung des grafischen Modells nicht unterbrochen, der Verwender aber auf die unterlassene Vorgabe eines Wertes für die gekennzeichnete Option aufmerksam gemacht.

Bei einer weiteren Ausgestaltung wird mindestens eine Option für ein Submodell auf einer Hierarchiestufe und/oder mindestens eine Option für das Modell auf höchster Hierarchiestufe und/oder mindestens eine Default-Option als Konsistenz-Option markiert, was bedeutet, dass spätestens zum Zeitpunkt der Übersetzung des grafischen Modells in Programmcode überprüft wird, ob die Werte für die Konsistenz-Option in allen Hierarchiestufen konsistent gesetzt sind, wobei insbesondere im Fall der Erkennung einer Inkonsistenz mindestens eine Meldung, vorzugsweise eine Fehler- oder Warnmeldung, ausgegeben wird. Durch die Möglichkeit der Markierung einer Option als Konsistenz-Option und der nachfolgenden Überprüfung von konsistenten Werten für die Konsistenz-Option kann sichergestellt werden, dass zwingende Konsistenz-Bedingungen eingehalten werden. Ein Beispiel für eine Konsistenz-Option ist die Bitbreite des Zielsystems, die mindestens pro Rechnereinheit auch für alle Submodelle (zugeordnet zu und somit später ausgeführt auf dieser Rechnereinheit) konsistent - das bedeutet im vorliegenden Fall werteinheitlich - gesetzt werden muss.

Gemäß einer ersten vorteilhaften Variante des Verfahrens wird im Fall des Erkennens einer Inkonsistenz die Übersetzung des grafischen Modells in Programmcode abgebrochen oder das die Inkonsistenz beinhaltende Modell bzw. Submodell wird in invalidierten Programmcode übersetzt. Im letzteren Fall wird die Übersetzung des grafischen Modells in Programmcode zwar nicht unterbrochen, jedoch wird in den Programmcode an entsprechender Stelle ein Hinweis auf die erfasste Inkonsistenz generiert, der eine Übersetzung des Programmcodes in das ausführbare Steuerungsprogramm verhindert. Gleichzeitig ermöglicht der vorhandene invalidierte Programmcode dem Verwender des Verfahrens die Inspektion des Programmcodes was zu Entwicklungszwecken vorteilhaft ist.

Bei einer weiteren alternativen Variante des Verfahrens wird im Falle des Erkennens einer mit inkonsistenten Werten belegten Konsistenz-Option der auf höchster Hierarchiestufe vorgegebene Wert für die Konsistenz-Option auch als Vorgabewert für die geschachtelten Submodelle auch niedrigerer Hierarchiestufe automatisch vorgegeben. Durch diese Strategie wird die konsistente Belegung der Konsistenz-Option erzwungen, so dass in jedem Fall ein gültiger Programmcode resultiert.

Eine Weiterentwicklung des erfindungsgemäßen Verfahrens sieht insgesamt eine Options-Dokumentation vor. Hier wird der Name und der Wert mindestens einer Option zusätzlich mit der Information über die Herkunft und/oder auch Herleitung des resultierenden Wertes dieser Option insgesamt, d. h. global, und/oder auch pro Hierarchiestufe dokumentiert, was nach der Codeerzeugung die Nachvollziehbarkeit erhöht, weshalb bestimmte Optionen mit bestimmten Werten belegt worden sind. Insbesondere wird die Herkunftsinformation in den korrespondierenden Teil des Programmcodes generiert, wobei als Herkunftsinformation vorzugsweise angegeben wird, ob die Option und/oder der Wert der Option in dem betreffenden Submodell lokal vorgegeben worden ist, oder ob die Option und/oder der Wert der Option in dem betreffenden Submodell von einem Submodell höherer Hierarchiestufe übernommen worden ist, oder ob die Option und/oder der Wert der Option in dem betreffenden Submodell z. B. durch eine Default-Vorgabe bestimmt worden ist. Die Dokumentation der Herkunftsinformation kann ganz unterschiedlich realisiert werden. Die Optionsinformation und mit ihr die Herkunftsinformation wird beispielsweise in mindestens einem Teil und/oder mindestens einer Datei des erzeugten Programmcodes als Kommentar und/oder als Code-Konstante und/oder als Präprozessormakro und/oder separat in mindestens einem weiteren Datenspeicher, insbesondere einer Datei oder einer Datenbank, dokumentiert und niedergelegt.

Gemäß einer alternativen Dokumentation der Optionsinformation ist vorgesehen, dass die Optionsinformation - und mit ihr die Herkunftsinformation - separat von der Übersetzung des grafischen Modells erzeugt wird, insbesondere die erzeugte dokumentierte Optionsinformation auf Fehler untersucht wird, vorzugsweise die Konsistenz-Optionen bzw. die vorgegebenen Werte für die Konsistenz-Optionen auf Verträglichkeit miteinander untersucht werden. Wenn es heißt, dass die Optionsinformation separat von der Übersetzung des grafischen Modells erzeugt wird, bedeutet dies, dass auch nur die Optionsinformation dokumentiert werden kann, eine Übersetzung des grafischen Modells in Programmcode nicht auch erfolgen muss. Dies hat den Vorteil, dass insbesondere bei einer nachfolgenden Untersuchung der dokumentierten Optionsinformationen sehr schnell festgestellt werden kann, ob möglicherweise die Übersetzung des grafischen Modells in Programmcode oder die Übersetzung des Programmcodes in das ausführbare Steuerungsprogramm an ungeeigneten Optionen oder ungeeignet gesetzten Werten für Optionen scheitert bzw. scheitern wird. Dabei ist zu berücksichtigen, dass die Übersetzung komplexer grafischer Modelle in Programmcode - in Abhängigkeit von der Größe des zugrunde liegenden grafischen Modells - durchaus mehrere Stunden beanspruchen kann, so dass durch den erfindungsgemäß vorgeschlagenen Plausibilitätstest basierend auf der Untersuchung der dokumentierten Options-informationen ein mögliches Scheitern des Übersetzungsprozesses im Vorfeld frühzeitig aufgedeckt werden kann.

Gemäß einer alternativen Variante ist vorgesehen, dass die Optionsinformation - und mit ihr die Herkunftsinformation - in den Programmcode selbst generiert wird, wobei die Optionsinformation durch geeignete Übersetzer-Anweisungen bei der Übersetzung des Programmcodes in das ausführbare Steuerungsprogramm durch den Übersetzer ausgewertet werden, insbesondere hinsichtlich der Konsistenz vorgegebener Werte bei Konsistenz-Optionen.

Nachfolgend ist beispielhaft dargestellt, wie durch den Übersetzer - hier ein C-Compiler- eine Überprüfung von Optionsinformationen durchgeführt werden kann. In dem Beispiel enthält das grafische Modell "higher" die Submodelle "lower1" und "lower2". Es ist eine Option "BitWidth" vorgesehen, die die Bitweite des Zielprozessors, also des Steuerungssystems, beschreibt. Für das Submodell "lower1" wird die Header-Datei "lower1.h" generiert, die die Optionsinformation im Rahmen einer #define-Anweisung enthält. Damit ist sowohl dokumentiert worden, welche Option - BitWidth - auf welchen Wert - 32 - gesetzt worden ist, genauso ist auch die Herkunftsinformation hinterlegt, nämlich durch Voranstellung des Terms "LOWER1 ". Genauso wird verfahren für das Submodell "lower2", das zur Erzeugung der Datei "lower2.h" führt. Offensichtlich sind für beide Submodelle unterschiedliche Werte für die Option "BitWidth" gesetzt worden. Die durch das Gesamtmodell "higher" bewirkte Erzeugung der Header-Datei "higher.h" enthält die Übersetzer-Anweisungen, die durch den Compiler ausgewertet werden können, indem nämlich die dokumentierten Werte der Option "BitWidth" auf Gleichheit überprüft werden und indem bei Ungleichheit eine Fehlermeldung ausgegeben wird.

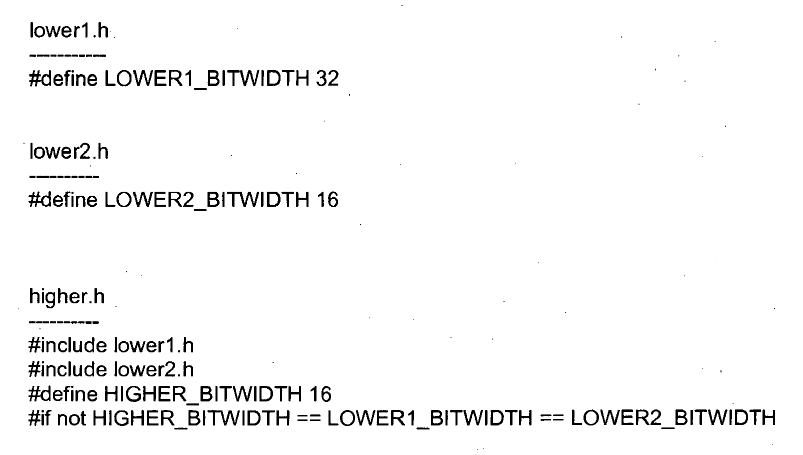

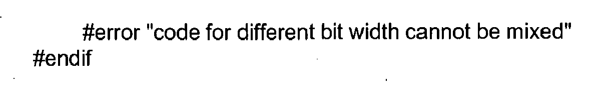

Im vorliegenden Fall ist demnach für das grafische Modell auf hierarchisch höchster Stufe Programmcode erzeugt worden, der Anweisungen enthält, mit denen die Optionen für hierarchisch tiefer stehende Submodelle zur Übersetzungszeit des Programmcodes in das ausführbare Steuerungsprogramm auf Verträglichkeit und Konsistenz geprüft werden können.

Die Optionen und die vorgegebenen Werte für die Optionen und ggf. ihre Klassifikation - ihre Markierung als Konstant-, Default- und/oder Konsistenz-Option - können an unterschiedlichen Orten hinterlegt werden. Gemäß einer ersten vorteilhaften Variante wird mindestens eine Option, ihr Wert und ggf. ihre Klassifikation zusammen mit dem grafischen Modell in wenigstens einer Modelldatei gespeichert, so dass die für die Codegenerierung und Übersetzung relevanten Informationen an das grafische Modell selbst geknüpft sind; in diesem Fall sind die Optionen direkt mit ihrem Herkunftsort verknüpft. In einer alternativen Ausgestaltung werden mindestens eine Option, ihr Wert und ggf. ihre Klassifikation in einer separaten Datenbank oder Datei abgelegt und dort mit dem jeweiligen Submodell assoziiert, so dass aufgrund dieser Referenz eine Zuordnung zu dem Herkunftsort in dem grafischen Modell vorhanden ist.

Die zuvor hergeleitete Aufgabe wird auch gelöst durch eine rechnergestützte Entwicklungsumgebung, in und mit der das zuvor dargestellte Verfahren implementiert ist. Die Entwicklungsumgebung dient also der rechnergestützten Erzeugung mindestens eines Teils eines ausführbaren Steuerungsprogramms, insbesondere eines Mess-, Steuer-, Regel- und/oder Kalibrierungsprogramms, zur Steuerung eines Steuerungssystems mit mindestens einer elektronischen Rechnereinheit, wobei die Funktionalität des Steuerungsprogramms zumindest teilweise in mindestens einem grafischen Modell beschrieben ist. Das grafische Modell ist in Submodelle gegliedert ist, wobei darüber hinaus ein Submodell einer Hierarchiestufe geschachtelt in Submodelle einer tieferen Hierarchiestufe gegliedert sein kann. Die Entwicklungsumgebung selbst muss nicht zwingend zur Bearbeitung eines grafischen Modells geeignet sein, sie muss jedenfalls aber Informationen über ein grafisches Modell aufnehmen können. Die Entwicklungsumgebung ermöglicht es, dass Werte für Optionen für die Übersetzung des grafischen Modells in Programmcode vorgebbar sind. Die Entwicklungsumgebung erzeugt dann unter Berücksichtigung der Werte der Optionen aus dem grafischen Modell Programmcode, wobei der Programmcode dann von der Entwicklungsumgebung mit in das ausführbare Steuerungsprogramm übersetzt wird. Das Steuerungsprogramm selbst ist dann ablauffähig auf dem Steuerungssystem. Durch die erfindungsgemäße Entwicklungsumgebung sind Werte für Optionen für die Übersetzung des grafischen Modells für wenigstens zwei geschachtelte Submodelle verschiedener Hierarchiestufen vorgebbar, wobei die Werte für die Optionen bei der Erzeugung von Programmcode für jedes Submodell durch die Entwicklungsumgebung berücksichtigt werden. Die Entwicklungsumgebung erkennt eine nicht mit einem Wert versehene Option des Submodells auf der niedrigen Hierarchiestufe und gibt für diese Option automatisch den Wert der korrespondierenden Option des Submodells auf der höheren Hierarchiestufe vor, wodurch automatisch eine Ergänzung nicht vorgenommener Wertevorgaben für Optionen realisiert ist. Die Entwicklungsumgebung ist entsprechend so eingerichtet, dass auch die weiteren zuvor dargestellten Verfahrensschritte von der Entwicklungsumgebung automatisch durchführbar sind, wobei die Entwicklungsumgebung die Vornahme ggf. notwendiger Verwendereingaben ermöglicht.

Im Einzelnen gibt es nun eine Vielzahl von Möglichkeiten, das erfindungsgemäße Verfahren zur Erzeugung mindestens eines Teils eines ausführbaren Steuerungsprogramms auszugestalten und weiterzubilden. Dazu wird verwiesen einerseits auf die dem Patentanspruch 1 nachgeordneten Patentansprüche, andererseits auf die folgende Beschreibung von Ausführungsbeispielen in Verbindung mit der Zeichnung. In der Zeichnung zeigen
- Fig. 1: schematisch die Komponenten zur Durchführung des Verfahrens zur Erzeugung zumindest eines Teils eines Steuerungsprogramms und ihren Wirkzusammenhang,
- Fig. 2: einen ersten Aspekt des erfindungsgemäßen Verfahrens zur Erzeugung eines ausführbaren Steuerungsprogramms,
- Fig. 3: einen weiteren Aspekt des erfindungsgemäßen Verfahrens hinsichtlich der Reichweite von Vorgaben,
- Fig. 4: die Verwendung von Konstant-Optionen im erfindungsgemäßen Verfahren,
- Fig. 5: die Verwendung von Default-Optionen im erfindungsgemäßen Verfahren,
- Fig. 6: die Verwendung von zwingend mit Werten zu belegenden Optionen im Rahmen des erfindungsgemäßen Verfahrens,
- Fig.7: die Verwendung von Konsistenz-Optionen mit dem erfindungsgemäßen Verfahren,
- Fig. 8: ein weiteres Ausführungsbeispiel hinsichtlich der Verwendung von Konsistenz-Optionen im Rahmen des erfindungsgemäßen Verfahrens und
- Fig. 9: ein Beispiel zur Hinterlegung von Optionen und Werten von Optionen zur Verwendung mit dem erfindungsgemäßen Verfahren.

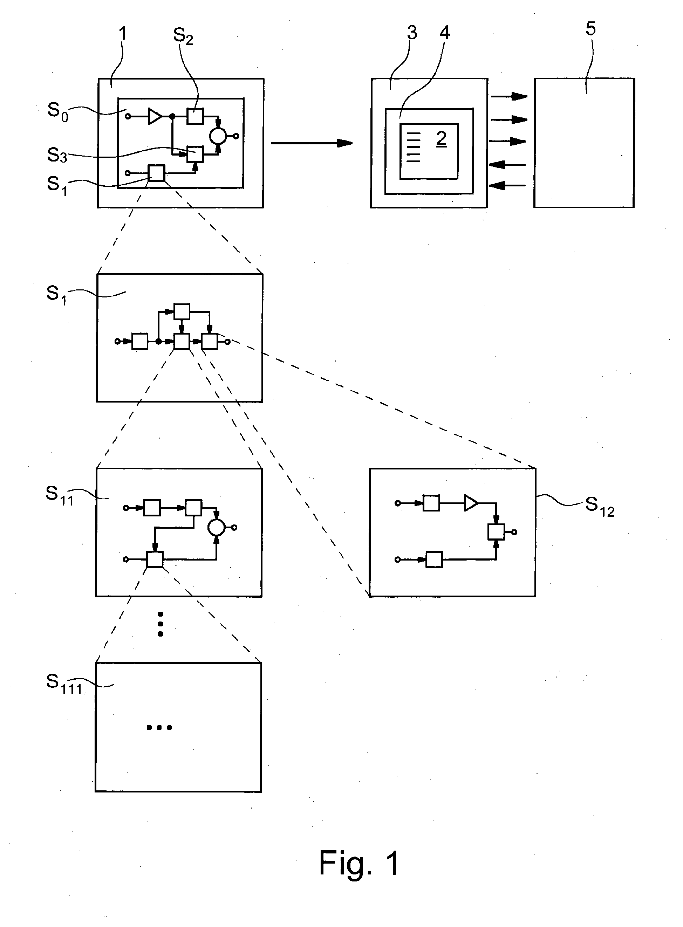

In Fig. 1 sind die Komponenten dargestellt, die zum Verständnis des erfindungsgemäßen Verfahrens erforderlich sind. Das erfindungsgemäße Verfahren wird rechnergestützt von der Entwicklungsumgebung 1 durchgeführt, wobei das Verfahrensergebnis mindestens ein Teil eines ausführbaren Steuerungsprogramms 2 ist, das der Steuerung eines Steuerungssystems 3 mit mindestens einer elektronischen Rechnereinheit 4 dient. Bei dem Steuerungssystem 3 handelt es sich vorliegend um ein Steuergerät mit I/O-Schnittstellen, über die das Steuerungssystem 3 mit einem physikalischen Prozess 5 wechselwirkt, wobei das Steuerungssystem 3 durch Ausgabe von Steuerungssignalen auf den Prozess 5 einwirkt und durch messtechnische Erfassung von Zustandsgrößen des Prozesses 5 Informationen über den Prozess 5 bezieht, so dass im vorliegenden Fall zielgerichtet auf den Prozess 5 eingewirkt werden kann.

Die Funktionalität des Steuerungsprogramms 2 wird zumindest teilweise in mindestens einem grafischen Modell S₀ beschrieben. In dem dargestellten Ausführungsbeispiel handelt es sich bei dem grafischen Modell S₀ um ein Blockschaltbild in der üblichen Signalflussdarstellung. Die als Blöcke/Dreiecke/Kreise dargestellten Übertragungsglieder nehmen mathematische Operationen an den Signalen vor. Das grafische Modell S₀ ist in Submodelle S₁, S₂, S₃ gegliedert, die generisch auch als Submodelle Sᵢ bezeichnet werden. Das Submodell S₁ liegt im vorliegenden Beispiel auf der höchsten Hierarchiestufe und ist geschachtelt in Submodelle S₁₁, S₁₂ einer tieferen Hierarchiestufe. Eine derartige Untergliederung der Submodelle einer tieferen Hierarchiestufe kann rekursiv mit Submodellen noch tieferer Hierarchiestufen weitergeführt werden, wie dies für das Submodell S₁₁ anhand des Submodells S₁₁ in Fig. 1 angedeutet ist. Mit diesem Verständnis von Submodell ist das grafische Modell S₀ auch ein Submodell, nämlich das Submodell auf höchster Hierarchiestufe.

Die Submodelle S₂, S₃ befinden sich auf der gleichen Hierarchiestufe wie das Submodell S₁, wobei ihre weitere hierarchische Gliederung in Fig. 1 nicht explizit dargestellt ist. Das grafische Gesamtmodell S₀ befindet sich auf der höchsten Hierarchiestufe. Das grafische Modell S₀ wird in Programmcode übersetzt, der hier im Einzelnen nicht dargestellt ist. Der Programmcode wird seinerseits dann in das ausführbare Steuerungsprogramm 2 übersetzt. Im vorliegenden Fall wird aus dem grafischen Modell So C-Programmcode erzeugt und dieser durch einen C-Compiler in das Steuerungsprogramm 2 übersetzt.

Vor dem Prozess der Übersetzung werden Werte x für Optionen X für die Übersetzung des grafischen Modells S₀ in Programmcode vorgegeben. In den dargestellten Ausführungsbeispielen werden die Optionen X mit einem oder mehreren der Großbuchstaben A, B, C, D, E, F bezeichnet, und werden Werte x für die Optionen X entsprechend mit einem oder mehreren der Kleinbuchstaben a, b, c, d, e, f bezeichnet. Unter Berücksichtigung der Werte a, b, c, d, e, f der Optionen A, B, C, D, E, F wird aus dem Modell S₀ rechnergestützt Programmcode erzeugt, und der Programmcode wird mit in das ausführbare Steuerungsprogramm 2 übersetzt. Wenn es heißt, dass der Programmcode "mit" in das ausführbare Steuerungsprogramm übersetzt wird, dann trägt dies dem Umstand Rechnung, dass das Steuerungsprogramm 2 nicht ausschließlich aus Programmcode hervorgehen muss, der auf dem grafischen Modell S₀ basiert, vielmehr können zur Beschreibung der Funktionalität des Steuerungsprogramms auch andere Informationen verwertet werden, beispielsweise in Form von anderem bereitgestellten Programmcode, der auch in das Steuerungsprogramm einfließen kann.

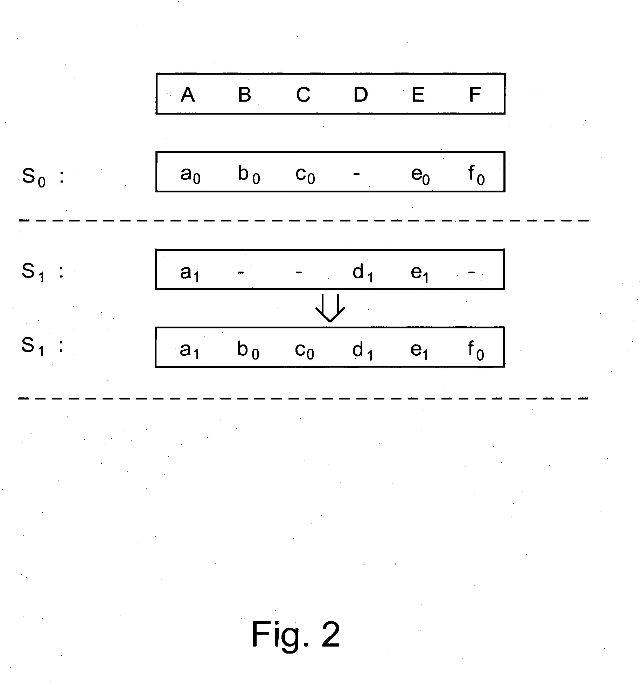

Fig. 2 zeigt die Arbeitsweise des erfindungsgemäßen Verfahrens zur rechnergestützten Erzeugung zumindest eines Teils des ausführbaren Steuerungsprogramms 2. Verfahrensgemäß wird ermöglicht, Werte xⱼ, - nachfolgend mit a₀, b₀ ,..., a₁, b₁ ,... usw. bezeichnet - für Optionen A, B, ... usw. für die Übersetzung des grafischen Modells S₀ für wenigstens zwei geschachtelte Submodelle Sⱼ verschiedener Hierarchiestufen vorzugeben - im vorliegenden Beispiel für die geschachtelten Submodelle S₀, S₁, wobei die Werte a₀, b₀ ,..., a₁, b₁ ,... usw. für die Optionen A, B, ... usw. bei der rechnergestützten Erzeugung von Programmcode für jedes Submodell S₀, S₁ berücksichtigt werden.

Für den Fall, dass eine Option X - im Beispiel gemäß Fig. 2 betrifft dies die Optionen B, C und F - des Submodells S₁ auf der niedrigeren Hierarchiestufe nicht mit einem Wert x versehen ist, wird diese Option - vorliegend B, C und F - auf der niedrigeren Hierarchiestufe auf den Wert x der korrespondierenden Option des Submodells S₀ auf der höheren Hierarchiestufe gesetzt, d. h. die entsprechenden Optionswerte der höheren Hierarchiestufe werden in der niedrigeren Hierarchiestufe übernommen. Im dargestellten Fall werden für das Submodell S₁ die Werte b₀, c₀ und f₀ von dem Submodell S₀ der höheren Hierarchiestufe übernommen. Durch die Ermöglichung der Vorgabe verschiedener Optionswerte für geschachtelte Submodelle auf verschiedenen Hierarchiestufen ist es möglich, Optionen granular und damit situationsgerechter für die Übersetzung des grafischen Modells bzw. von Submodellen des grafischen Modells vorzugeben. Durch die Maßnahme, dass nicht gesetzte Werte für Optionen in einer niedrigeren Hierarchiestufe nicht gesetzt sind und dafür Werte aus der höheren Hierarchiestufe übernommen werden, wird eine einheitliche Verhaltensweise erreicht bei gleichzeitig geschickter Realisierung einer Fehlervermeidung.

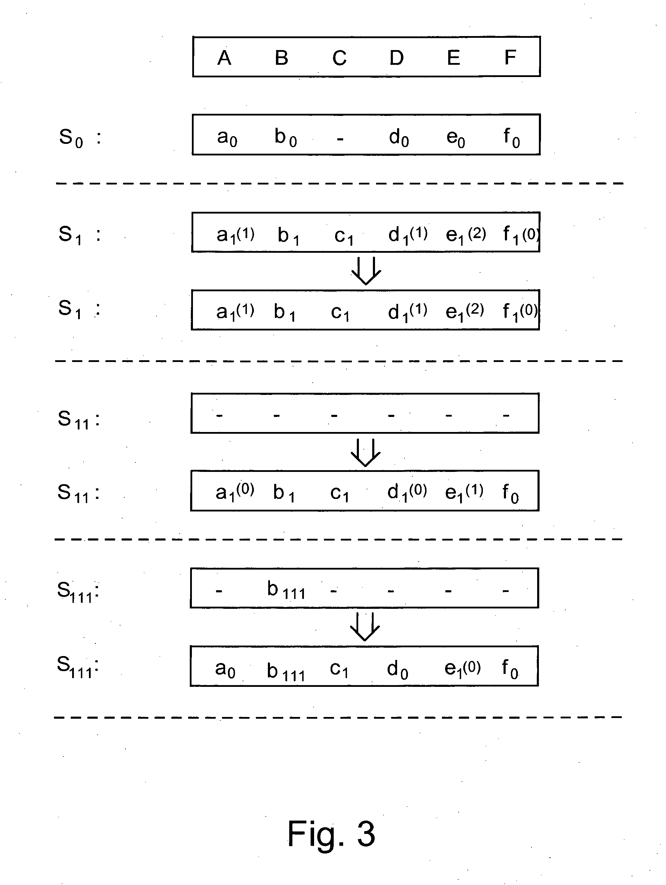

Fig. 3 zeigt zwei weiterentwickelte Verhaltensweisen des zuvor beschriebenen rechnergestützt automatisch durchgeführten Verfahrens zur Erzeugung eines ausführbaren Steuerungsprogramms. Wie im vorangehenden Beispiel auch stehen hier die Optionen A,..., F zur Verfügung und können mit Werten a,..., f belegt werden. Im Modell S₀ auf höchster Hierarchiestufe sind bis auf die Option C alle anderen Optionen A, B, D, E, F mit Werten a₀, b₀, d₀, e₀, f₀ belegt. Für die Submodelle S₁, S₁₁, S₁₁₁ der nächsttieferen Hierarchiestufen sind jeweils zwei Zeilen dargestellt. Die oberste Zeile gibt an, welche Werte für das Submodell und für die einzelnen Optionen aktiv gesetzt worden sind, die untere Zeile gibt jeweils an, wie nach Anwendung der Gesetzmäßigkeiten des erfindungsgemäßen Verfahrens - jeweils angedeutet durch den nach unten weisenden Pfeil - die Werte ggf. abgeändert worden sind.

Es soll zunächst nur die Option B betrachtet werden. Für das grafische Modell S₀ auf oberster Hierarchieebene ist für die Option B der Wert b₀ gesetzt worden. Für das Submodell S₁ auf der nächstniedrigeren Hierarchiestufe ist für die Option B der Wert b₁ gesetzt worden. Für den hier vorliegenden Fall, das für geschachtelte Submodelle S₀, S₁ unterschiedliche Werte b₀, b₁ gesetzt worden sind, wird von dem hier realisierten Verfahren auf der niedrigeren Hierarchiestufe S₁ der vorgegebene Wert b₁ für die Option B beibehalten, der Wert b₁ hat auf der niedrigeren Hierarchiestufe S₁ also Vorrang vor dem im Modell S₀ auf der höheren Hierarchiestufe gesetzten Wert b₀ für die Option B. Das gleiche Verhalten ist bei dem Submodell S₁₁₁ auf der niedrigsten Hierarchiestufe zu beobachten. Hier ist der für die Option B gesetzte Wert b₁₁₁ vorrangig vor dem für die Option B für das Submodell S₁₁ auf der nächsthöheren Hierarchiestufe gesetzte Wert b₁, so dass der Wert b₁₁₁ für das Submodell S₁₁₁ beibehalten wird. Wäre für die Option B für das Submodell S₁₁₁ kein Wert vorgegeben worden, so hätte nach dem anhand von Fig. 2 beschriebenen Verfahren der für das Submodell S₁₁ geltende Wert b₁ auch für das Submodell S₁₁₁ übernommen werden müssen.

Anhand von Fig. 3 ist eine weitere besondere Ausprägung des Verfahrens zur Erzeugung eines ausführbaren Steuerungsprogramms 2 ersichtlich. Gemäß der dargestellten Verfahrensvariante kann für einen vorgegebenen Wert - im vorliegenden Fall die Werte a₁, d₁, e₁ und f₁ - für eine Option - vorliegend für die Optionen A, D, E und F - für ein Submodell - im dargestellten Beispiel für das Submodell S₁ - auf einer Hierarchiestufe die Anzahl der niedrigeren Hierarchiestufen angegeben werden, in denen der vorgegebene Wert für die betreffende Option Vorrang hat. In dem dargestellten Ausführungsbeispiel nimmt nach dieser Anzahl von niedrigeren Hierarchiestufen der Wert für die betreffende Option wieder den Wert der höheren Hierarchiestufe an. Diese Verhaltensweise wird zunächst exemplarisch anhand des im Submodell S₁ gesetzten Wertes a₁ für die Option A erläutert. Für das Submodell S₁ ist nicht nur der Wert a₁ gesetzt worden, sondern der Wert a₁ ist zusätzlich mit der Information seiner Reichweite versehen worden, d. h. mit der Angabe, in wie viele niedrigere Hierarchiestufen der Wert auch in die verschachtelten Submodelle S₁₁, S₁₁₁ hineingetragen wird. Für das Submodell S₁ ist demnach der Wert a₁(1) gesetzt worden. Nach der zuvor erläuterten Vorrangigkeit lokal - also innerhalb eines Subsystems - gesetzter Werte für eine Option wird dieser Wert a₁(1) nicht von dem in dem Submodell S₀ in höherer Hierarchiestufe gesetzten Wert a₀ für die Option A überdeckt, er bleibt vielmehr in dem Submodell S₁ erhalten. Gemäß der Vorgabe soll der Wert a₁ genau eine niedrigere Hierarchiestufe weit weitergereicht werden, also bis in das Submodell S₁₁. Im Submodell S₁₁ hat der Wert a₁ nur noch die Reichweite 0, kenntlich gemacht durch die Notation a₁(0). Da die Reichweite hier erschöpft ist, nimmt die Option A in dem Submodell S₁₁₁ der nächstniedrigeren Hierarchiestufe wieder den Vorgängerwert a₀ an. Korrespondierendes Verhalten zeigen die mit einer Reichweite versehenden Werte d₁, e₁ und f₁ im Submodell S₁.

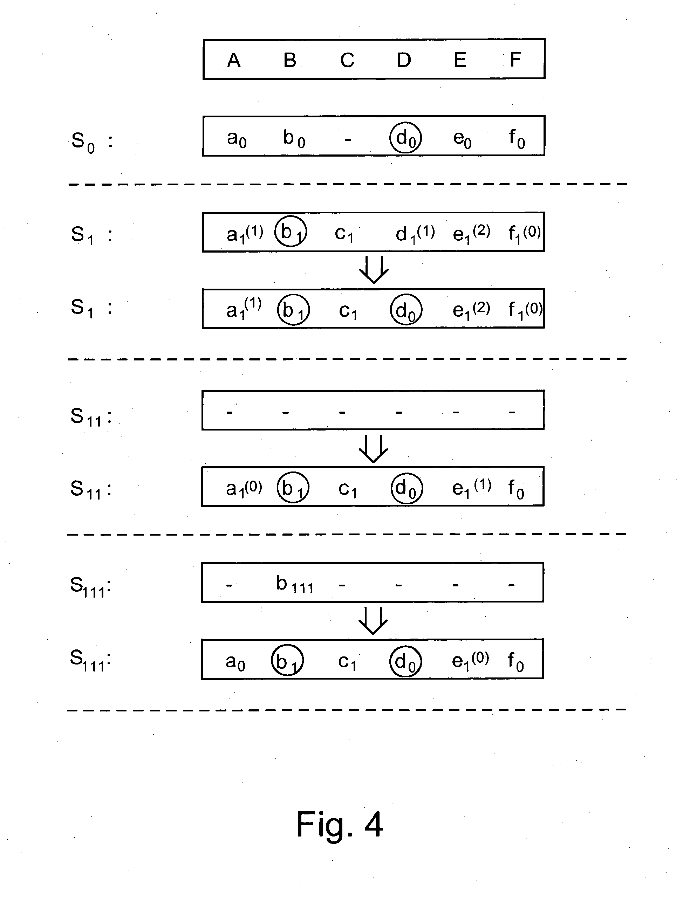

Fig. 4 zeigt das Verhalten des rechnergestützten Verfahrens, wenn ein vorgegebener Wert für eine Option für ein Submodell auf einer Hierarchiestufe (und damit auch einen Wert für eine Option für das Modell auf höchster Hierarchiestufe) als unveränderlich gekennzeichnet wird, also als "Konstant-Option" gekennzeichnet wird. In dem in Fig. 4 dargestellten Ausführungsbeispiel sind unveränderliche Werte für Optionen umkreist dargestellt. Auf oberster Modellebene S₀ ist dies der Wert d₀ für die Option D, in Submodell S₁ ist dies zusätzlich der Wert b₁ für die Option B. Nachdem die Werte b₁ und d₀ als unveränderlich gekennzeichnet worden sind, werden diese Werte b₁, d₀ auch von dem geschachtelten Subsystemen S₁₁, S₁₁₁ auf niedrigeren Hierarchiestufen übernommen und zwar auch dann, wenn auf einer dieser niedrigeren Hierarchiestufen S₁₁, S₁₁₁ ein anderer Wert für die korrespondierende Option B, D festgesetzt wird (siehe den Wert d₁(1) in Subsystem S₁ und den Wert b₁₁₁ in Subsystem S₁₁₁).

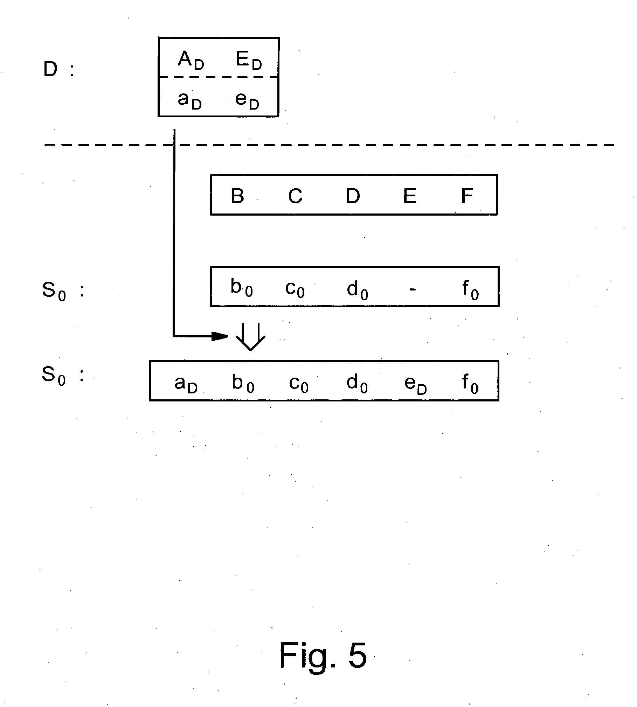

In einer weiteren Ausgestaltung des Verfahrens (Fig. 5) wird wenigstens eine Default-Option X_{D} für die Übersetzung des grafischen Modells S₀ in Programmcode bestimmt und es werden diesen Default-Optionen X_{D} jeweils ein Default-Wert x_{D} vorgegeben. Im vorliegenden Beispiel werden die Default-Werte x_{D} für die Default-Optionen X_{D} so verwendet, dass sie als Vorgabewert für die korrespondierende Option des Modells S₀ auf höchster Hierarchiestufe verwendet werden, falls der Wert der korrespondierenden Optionen im grafischen Modell nicht bestimmt ist. Im Beispiel gemäß Fig. 5 sind für das Modell S₀ nur die Optionen B, C, D, E, F an sich bekannt, wobei lediglich die Optionen B, C, D und F im grafischen Modell S₀ auf höchster Hierarchieebene mit den Werten b₀, c₀, d₀ und f₀ belegt werden. Das automatisierte Verfahren - wiederum gekennzeichnet durch den nach unten weisenden Pfeil - sorgt dafür, dass im Falle ungesetzter Werte für Optionen - dies betrifft auch die im Modell noch unbekannte Option A - die Default-Werte für diese Optionen automatisch gesetzt werden. Dadurch wird verhindert, dass lokal Werte gesetzt werden müssen, wenn diese zuvor einheitlich als Default-Wert festgelegt worden sind. Ferner kann so auch gewährleistet werden, dass ein Übersetzungsvorgang abgebrochen wird, falls versäumt worden ist, bestimmte Optionen mit Werten zu belegen, die Default-Werte dienen hier als Rückfallposition. In einer bevorzugten Ausgestaltung können Default-Werte für Optionen auch lokal überschrieben werden. Wenn beispielsweise in der in Fig. 5 gezeigten Variante zusätzlich die Option C als Default-Option C_{D} mit dem Default-Wert c_{D} bestimmt worden wäre, würde der im grafischen Modells S₀ gesetzte Wert c₀ für die Option C diesen Default-Wert c₀ überschreiben.

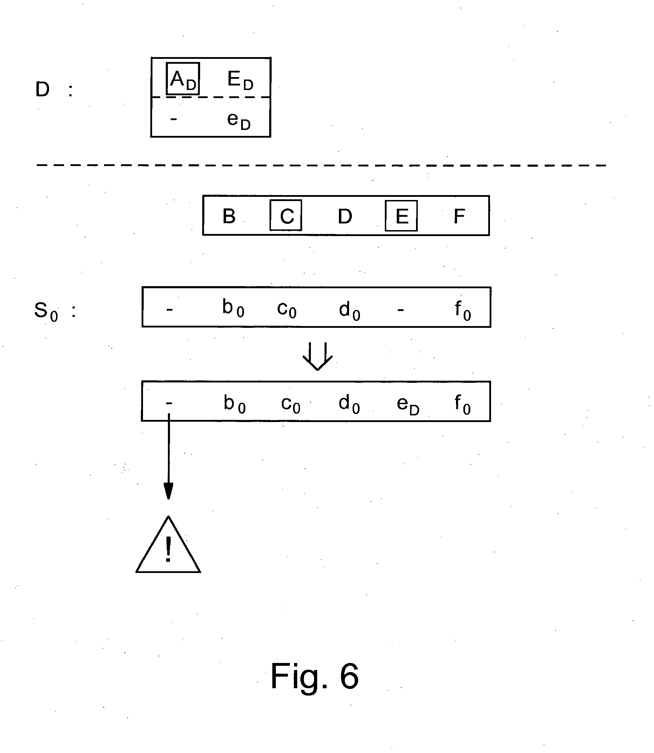

Fig. 6 zeigt eine Ausgestaltung des Verfahrens, bei der es möglich ist, eine Option so zu kennzeichnen, dass sie innerhalb des Modells oder innerhalb eines Submodells oder auch als Default-Option mit einem Wert belegt werden muss. In Fig. 6 sind die Default-Option A_{D}, die Option C und die Option E als zwingend mit einem Wert zu belegende Optionen jeweils durch eine quadratische Umrandung gekennzeichnet. Unterbleibt die Belegung der so gekennzeichneten Optionen, so wird eine Fehlermeldung oder Warnung ausgegeben, wenn die zugehörige Option zum Zeitpunkt der Übersetzung des grafischen Modells S₀ im Programmcode nicht in einer tiefer liegenden Hierarchiestufe mit einem Wert belegt worden ist. In dem in Fig. 6 dargestellten Beispiel wird die als mit einem Wert zu belegende gekennzeichnete Option C in Modell S₀ auf höchster Hierarchiestufe mit dem Wert C₀ belegt, so dass die Vorgabe der zwingenden Werte-Belegung erfüllt ist. Die als zwingend mit einem Wert zu belegen gekennzeichnete Option E wird durch den Default-Wert e_{D} der Default-Option E_{D} belegt, so dass auch in diesem Fall die Vorgabe der zwingenden Werte-Belegung erfüllt ist. Im Falle der als zwingend mit einem Wert zu belegenden Default-Option A_{D} ist die konkrete Vorgabe eines Wertes a für die Option A_{D} unterblieben, so dass eine Warnung ausgegeben wird; in einer nicht dargestellten Variante wird in der gleichen Situation mit einem Fehler abgebrochen.

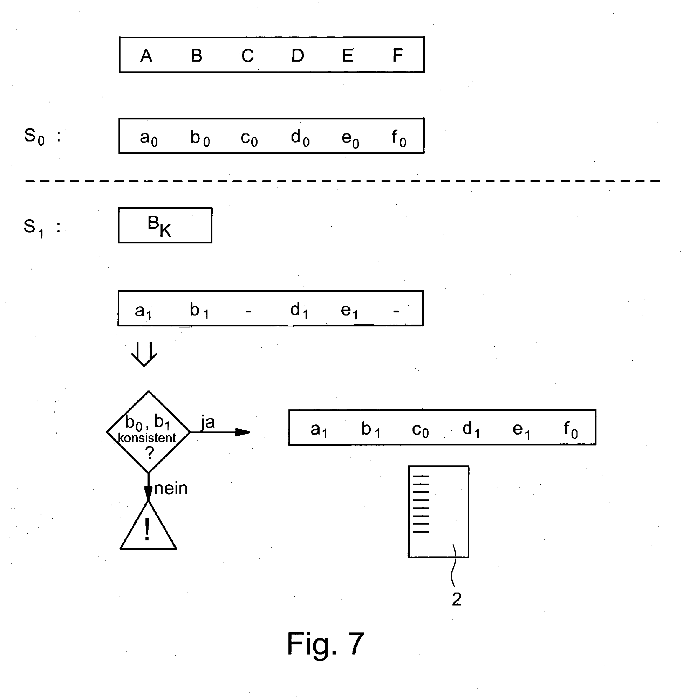

In Fig. 7 wird die automatisierte Verwendung von Konsistenz-Optionen X_{K} erläutert. Die in Fig. 7 dargestellte Ausprägung des Verfahrens ermöglicht es, eine bestimmte Option X als so genannte Konsistenz-Option X_{K} zu kennzeichnen, was im dargestellten Fall im Submodell S₁ auf die Option B zutrifft, die dort als Konsistenz-Option B_{K} markiert ist. Die Markierung einer Option als Konsistenz-Option X_{K} ist dann sinnvoll, wenn eine hohe Wahrscheinlichkeit unauflösbarer Konflikte besteht, falls für verschiedene verschachtelte Submodelle inkonsistente - insbesondere von ihrem Wert her verschiedene - Vorgaben für diese Optionen gemacht werden. Ein Beispiel für eine solche Option ist wiederum die Bitbreite für die Ziel-Hardware, also für das Steuerungssystem 3, auf dem das Steuerungsprogramm 2 betrieben werden soll. Die Markierung der Option B als Konsistenz-Option löst spätestens zum Zeitpunkt der Übersetzung des grafischen Modell S₀ eine Überprüfung der Werte für die Konsistenz-Option in allen Hierarchiestufen aus, wobei im Falle der Erkennung einer Inkonsistenz eine Warnmeldung ausgegeben wird; oder mit einer Fehlermeldung abgebrochen wird. Fällt der Konsistenz-Test positiv aus, wird der Programmcode und das Steuerungsprogramm 2 erzeugt.

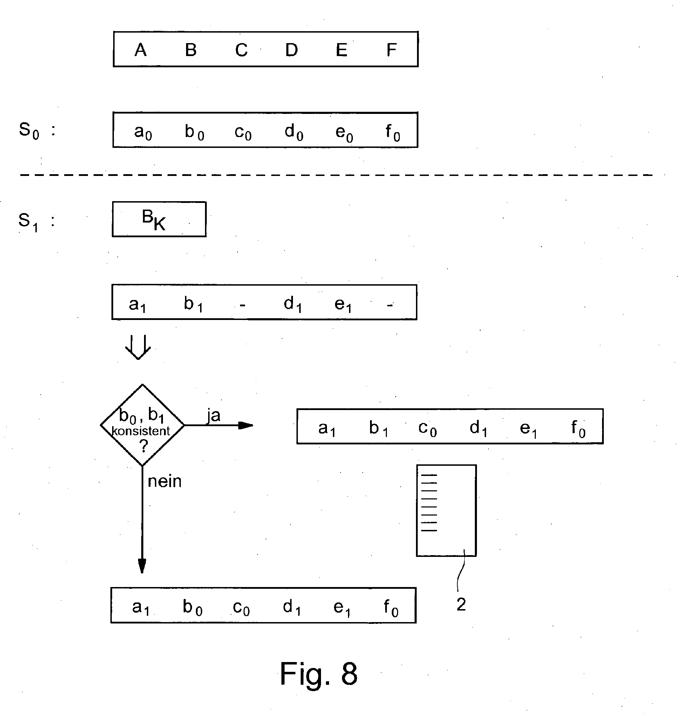

Fig. 8 zeigt eine Weiterentwicklung des anhand Fig. 7 erläuterten Verfahrens im Umgang mit Konsistenz-Optionen. Die Ausgangssituation ist dieselbe wie in Fig. 7, der Unterschied besteht lediglich in dem Verhalten des dargestellten automatischen Verfahrens für den Fall, dass eine Inkonsistenz erkannt wird. Wenn die unterschiedlichen Werte b₀ und b₁ für die Konsistenz-Option B_{K} inkonsistent sind, dann bricht das Verfahren gemäß Fig. 8 den Übersetzungsvorgang nicht ab, sondern es wird der in höchster Hierarchiestufe gesetzte Wert - vorliegend der Wert b₀ - für die Konsistenz-Option B_{K} auch für alle Submodelle auf niedrigeren Hierarchiestufen übernommen, so dass Konsistenz im Sinne von Werteinheitlichkeit erzielt wird und auf dieser Basis letztlich das Steuerungsprogramm erzeugt wird.

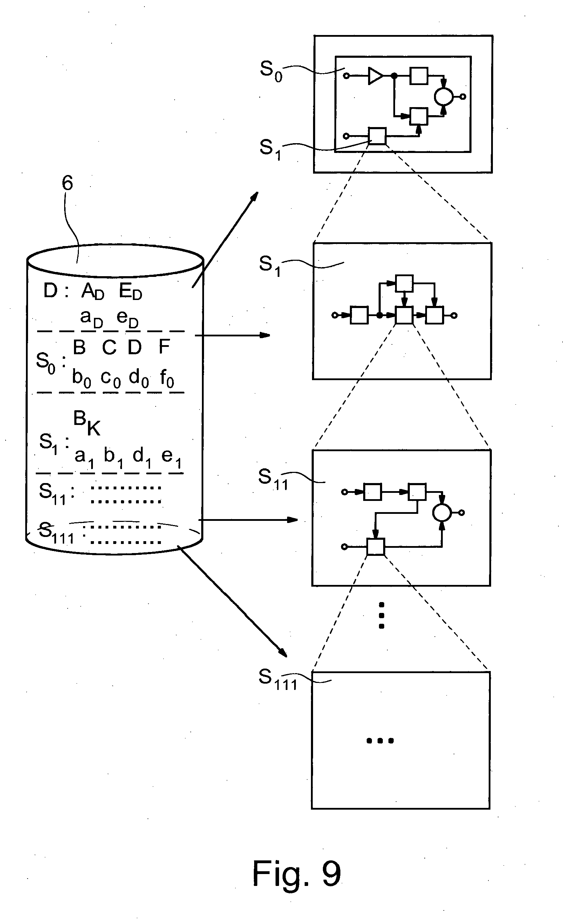

In Fig. 9 ist gezeigt, dass die Optionen A,..., F und die zugehörigen Werte a,..., f und auch ihre Klassifikationen - beispielsweise Default-, Konsistenz- oder Konstant-Optionen - separat von dem grafischen Modell in einer Datenbank 6 abgelegt sind, wobei in der Datenbank 6 zusätzlich Referenzen zu dem jeweiligen Submodell S₀, S₁, S₁₁, S₁₁₁ hinterlegt sind, so dass die Daten mit dem jeweiligen Submodell S₀, S₁, S₁₁, S₁₁₁ assoziiert sind. Die Referenzierung ist in der Datenbank 6 durch die Nennung des jeweiligen Submodells S₀, S₁, S₁₁, S₁₁₁ realisiert.

## Patentansprüche

1. Verfahren zur rechnergestützten Erzeugung mindestens eines Teils eines ausführbaren Steuerungsprogramms (2), insbesondere eines Mess-, Steuer, Regel- und/oder Kalibrierungsprogramms, zur Steuerung eines Steuerungssystems (3) mit mindestens einer elektronischen Rechnereinheit (4), wobei die Funktionalität des Steuerungsprogramms (2) zumindest teilweise in mindestens einem grafischen Modell (S₀) beschrieben ist und das grafische Modell (S₀) in Hierarchiestufen in Submodelle (Sᵢ) gegliedert ist, wobei ein Submodell (Sᵢ) einer Hierarchiestufe geschachtelt in Submodelle (Sⱼ) einer tieferen Hierarchiestufe gegliedert sein kann, wobei Werte (x) für Optionen (X) für die Übersetzung des grafischen Modells (S₀) in Programmcode vorgegeben werden und unter Berücksichtigung der Werte (x) der Optionen (X) aus dem Modell (S₀) rechnergestützt Programmcode erzeugt wird und der Programmcode mit in das ausführbare Steuerungsprogramm (2) übersetzt wird,
**dadurch gekennzeichnet,**
**dass** Werte (xⱼ) für Optionen (X) für die Übersetzung des grafischen Modells (S₀) für wenigstens zwei geschachtelte Submodelle (Sⱼ) verschiedener Hierarchiestufen vorgegeben werden, und die Werte (xⱼ) für die Optionen (X) bei der rechnergestützten Erzeugung von Programmcode für jedes Submodell (Sⱼ) berücksichtigt werden,
wobei eine nicht mit einem Wert (xⱼ) versehene Option (X) des Submodells (Sⱼ) auf der niedrigeren Hierarchiestufe den Wert (xⱼ) der korrespondierenden Option (X) des Submodells (Sⱼ) auf der höheren Hierarchiestufe übernimmt.

2. Verfahren nach Anspruch 1, **dadurch gekennzeichnet, dass** ein vorgegebener Wert (xⱼ) für eine Option (X) auf der niedrigeren Hierarchiestufe Vorrang hat vor dem vorgegebenen Wert (xⱼ) für die korrespondierende Option (X) auf der höheren Hierarchiestufe.

3. Verfahren nach Anspruch 1 oder 2, **dadurch gekennzeichnet, dass** für einen vorgegebenen Wert (xⱼ) für eine Option (X) für ein Submodell (Sⱼ) auf einer Hierarchiestufe die Anzahl ihrer nachfolgenden niedrigeren Hierarchiestufen angegeben wird, in denen der vorgegebene Wert (xⱼ) für die betreffende Option (X) Vorrang hat, insbesondere wobei nach dieser Anzahl von niedrigeren Hierarchiestufen der Wert (x) für die betreffende Option (X) wieder den Wert (x) der höheren Hierarchiestufe annimmt.

4. Verfahren nach einem der Ansprüche 1 bis 3, **dadurch gekennzeichnet, dass** ein vorgegebener Wert (xⱼ) für eine Option (X) für ein Submodell (Sⱼ) auf einer Hierarchiestufe und/oder für eine Option für das Modell (S₀) auf höchster Hierarchiestufe als unveränderlich gekennzeichnet wird (Konstant-Option), so dass der Wert (xⱼ) für diese Option (X) auf einer niedrigeren Hierarchiestufe nicht mehr verändert werden kann, insbesondere auch dann nicht, wenn auf einer niedrigeren Hierarchiestufe ein anderer Wert (xⱼ) für die korrespondierende Option (X) festgesetzt wird oder festgesetzt worden ist.

5. Verfahren nach einem der Ansprüche 1 bis 4, **dadurch gekennzeichnet, dass** eine Default-Option (X_{D}) für die Übersetzung des grafischen Modells (S₀) in Programmcode bestimmt wird und ein Default-Wert (x_{D}) vorgegeben wird, der insbesondere als Vorgabewert für die korrespondierende Option (X) des Modells (S₀) auf höchster Hierarchiestufe verwendet wird, falls der Wert (x) der korrespondierenden Option (X) im grafischen Modell (So) nicht bestimmt ist.

6. Verfahren nach einem der Ansprüche 1 bis 5, **dadurch gekennzeichnet, dass** mindestens eine Option (X) für ein Submodell (Sⱼ) auf einer Hierarchiestufe und/oder mindestens eine Option (X) für das Modell (S₀) auf höchster Hierarchiestufe und/oder mindestens eine Default-Option (Xⱼ) markiert wird als eine auf einer tieferliegenden Hierarchiestufe mit einem Wert (x) zu versehende Option (X), wobei eine Fehlermeldung/Warnung ausgegeben wird, wenn die zugehörige Option (X) zum Zeitpunkt der Übersetzung des grafischen Modells (S₀) in Programmcode nicht in einer tieferliegenden Hierarchiestufe mit einem Wert (x) belegt worden ist.

7. Verfahren nach einem der Ansprüche 1 bis 6, **dadurch gekennzeichnet, dass** mindestens eine Option (X) für ein Submodell (Sⱼ) auf einer Hierachiestufe und/oder mindestens eine Option (X) für das Modell (S₀) auf höchster Hierarchiestufe und/oder mindestens eine Default-Option markiert wird als eine Konsistenz-Option (X_{K}), wobei spätestens zum Zeitpunkt der Übersetzung des grafischen Modells (S₀) in Programmcode überprüft wird, ob die Werte (x) für die Konsistenz-Option (X_{K}) in allen Hierarchiestufen der betroffenen geschachtelten Submodelle (Sⱼ) konsistent gesetzt sind, insbesondere wobei im Falle der Erkennung einer Inkonsistenz mindestens eine Meldung, vorzugsweise eine Fehler- oder Warnmeldung, ausgegeben wird.

8. Verfahren nach Anspruch 7, **dadurch gekennzeichnet, dass** im Falle des Erkennens einer Inkonsistenz die Übersetzung des grafischen Modells (S₀) in Programmcode abgebrochen wird, oder dass das die Inkonsistenz beinhaltende Modell (S₀) bzw. Submodell (Sⱼ) in invalidierten Programmcode übersetzt wird.

9. Verfahren nach Anspruch 7, **dadurch gekennzeichnet, dass** im Falle des Erkennens einer mit inkonsistenten Werten belegten Konsistenz-Option (X_{K}) der auf höchster Hierarchiestufe vorgegebene Wert (x) für die Konsistenz-Option (X_{K}) auch als Vorgabewert (x) für die geschachtelten Submodelle (Sⱼ) auf niedrigerer Hierarchiestufe automatisch vorgegeben wird.

10. Verfahren nach einem der Ansprüche 1 bis 9, **dadurch gekennzeichnet, dass** Name und Wert (x) mindestens einer Option (X) zusätzlich mit der Information über die Herkunft des Wertes (x) dieser Option (X) als Optionsinformation dokumentiert wird, insbesondere die Optionsinformation in den korrespondierenden Teil des Programmcodes generiert wird, wobei als Herkunftsinformation vorzugsweise angegeben wird, ob die Option (X) und/oder der Wert der Option in dem betreffenden Submodell (Sⱼ) lokal vorgegeben worden ist, oder ob die Option (X) und/oder der Wert (x) der Option (X) in dem betreffenden Submodell (Sⱼ) von einem Submodell (Sⱼ) höherer Hierarchiestufe übernommen worden ist, oder ob die Option (X) und/oder der Wert (x) der Option (X) in dem betreffenden Submodell (Sⱼ) durch eine Default-Vorgabe gesetzt worden ist.

11. Verfahren nach Anspruch 10, **dadurch gekennzeichnet, dass** die dokumentierte Optionsinformation separat von der Übersetzung des grafischen Modells (S₀) in Programmcode erzeugt wird, insbesondere die erzeugte dokumentierte Optionsinformation auf Fehler untersucht wird, insbesondere die Konsistenz-Optionen (X_{K}) auf Konsistenz untersucht werden.

12. Verfahren nach Anspruch 10, **dadurch gekennzeichnet, dass** die Optionsinformation in den Programmcode generiert wird, wobei die Optionsinformation durch zusätzliche Übersetzer-Anweisungen bei der Übersetzung des Programmcodes in das ausführbare Steuerungsprogramm (2) durch den Übersetzer ausgewertet und somit die Optionen geprüft werden, insbesondere hinsichtlich der Konsistenz vorgegebener Werte (x) bei Konsistenz-Optionen (X_{K}).

13. Verfahren nach einem der Ansprüche 1 bis 12, **dadurch gekennzeichnet, dass** mindestens eine Option (X), ihr Wert (x) und ggf. ihre Klassifikation (Konstant-, Default-, Konsistenz-Option) zusammen mit dem grafischen Modell (S₀) in wenigstens einer Modelldatei gespeichert werden, und/oder dass mindestens eine Option (X), ihr Wert (x) und ggf. ihre Klassifikation (Konstant-, Default-, Konsistenz-Option) in einer separaten Datenbank abgelegt werden und dort mit dem jeweiligen Submodell (Sⱼ) assoziiert werden.

14. Verfahren nach einem der Ansprüche 1 bis 13, **dadurch gekennzeichnet, dass** mindestens eine Option (X) Direktiven zum Speicherlayout im erzeugten Programmcode und/oder das Speicherlayout des Steuerungsprogramms (2) beeinflusst, insbesondere unter Berücksichtigung der Speicherbereiche und/oder der Rechnereinheit des Steuerungssystems.

15. Verfahren nach einem der Ansprüche 1 bis 14, **dadurch gekennzeichnet, dass** mindestens eine Option (X) den erzeugten Programmcode an die Rechnereinheit des Steuerungssystems (3) anpasst, insbesondere an deren Bitbreite.

## Claims

1. A method for the computer-aided generation of at least one part of an executable control program (2), particularly a measuring, control, regulating, and/or calibration program, for controlling a control system (3) having at least one electronic processor unit (4), whereby the functionality of the control program (2) is described at least partially in at least one graphical model (So) and the graphical model (So) is divided in hierarchical levels into submodels (Si), whereby a submodel (Si) of a hierarchical level can be divided nested into submodels (Sⱼ) of a lower hierarchical level, whereby values (x) for options (X) for the compiling of the graphical model (So) to program code are preset and with consideration of the values (x) of the options (X), program code is generated computer-aided from the model (So) and the program code is co-compiled to the executable control program (2),
**characterized in that**
values (xⱼ) for options (X) for the compiling of the graphical model (So) for at least two nested submodels (Sⱼ) of different hierarchical levels are preset, and the values (xⱼ) for the options (X) are taken into account in the computer-aided generation of program code for each submodel (Sⱼ),
whereby an option (X) of the submodel (Sⱼ), said option not provided with a value (xⱼ), at the lower hierarchical level assumes the value (xⱼ) of the corresponding option (X) of the submodel (Sⱼ) at the higher hierarchical level.

2. The method according to claim 1, **characterized in that** a preset value (xⱼ) for an option (X) at the lower hierarchical level has precedence over the preset value (xⱼ) for the corresponding option (X) at the higher hierarchical level.

3. The method according to claim 1 or 2, **characterized in that** for a preset value (xⱼ) for an option (X) for a submodel (Sⱼ) at a hierarchical level, the number of lower hierarchical levels following it is specified, in which the preset value (xⱼ) for the respective option (X) has precedence, whereby particularly according to this number of lower hierarchical levels the value (x) for the respective option (X) again assumes the value (x) of the higher hierarchical level.

4. The method according to one of claims 1 to 3, **characterized in that** a preset value (xⱼ) for an option (X) for a submodel (Sⱼ) at a hierarchical level and/or for an option for the model (So) at the highest hierarchical level is designated as unchangeable (constant option), so that the value (xⱼ) for this option (X) at a lower hierarchical level can no longer be changed, particularly also when another value (xⱼ) is or has been established for the corresponding option (X) at a lower hierarchical level.

5. The method according to one of claims 1 to 4, **characterized in that** a default option (X_{D}) for the compiling of the graphical model (So) to program code is defined and a default value (x_{D}) is preset, which is used particularly as a preset value for the corresponding option (X) of the model (S₀) at the highest hierarchical level, if the value (x) of the corresponding option (X) is not defined in the graphical model (S₀).

6. The method according to one of claims 1 to 5, **characterized in that** at least one option (X) for a submodel (Sⱼ) at a hierarchical level and/or at least one option (X) for the model (S₀) at the highest hierarchical level and/or at least one default option (Xⱼ) are labeled as an option (X) to be provided with a value (x) at a lower hierarchical level, whereby an error message/warning is output, when the associated option (X) at the time of the compiling of the graphical model (S₀) to program code has not been assigned a value (x) at a lower hierarchical level.

7. The method according to one of claims 1 to 6, **characterized in that** at least one option (X) for a submodel (Sⱼ) at a hierarchical level and/or at least one option (X) for the model (S₀) at the highest hierarchical level and/or at least one default option are labeled as a consistency option (X_{K}), whereby at the latest at the time of the compiling of the graphical model (S₀) to program code it is verified whether the values (x) for the consistency option (X_{K}) are set consistently in all hierarchical levels of the respective nested submodel (Sⱼ), whereby particularly if an inconsistency is detected, at least one message, preferably an error or warning message, is output.

8. The method according to claim 7, **characterized in that** if an inconsistency is detected, the compiling of the graphical model (S₀) to program code is terminated, or that the inconsistency-containing model (S₀) or submodel (Sⱼ) is compiled to invalidated program code.

9. The method according to claim 7, **characterized in that** if a consistency option (X_{K}) assigned inconsistent values is detected, the value (x), preset at the highest hierarchical level, for the consistency option (X_{K}) is also automatically preset as the preset value (x) for the nested submodels (Sⱼ) at the lower hierarchical level.

10. The method according to one of claims 1 to 9, **characterized in that** the name and value (x) of at least one option (X) are documented in addition with the information on the source of the value (x) of this option (X) as options information, in particular the options information is generated in the corresponding part of the program code, whereby it is preferably specified as source information whether the option (X) and/or the value of the option have been preset locally in the respective submodel (Sⱼ), or whether the option (X) and/or the value (x) of the option (X) in the respective submodel (Sⱼ) have been assumed from a submodel (Sⱼ) of a higher hierarchical level, or whether the option (X) and/or the value (x) of the option (X) in the respective submodel (Sⱼ) have been set by a default preset.

11. The method according to claim 10, **characterized in that** the documented options information is generated separately from the compiling of the graphical model (S₀) to program code, particularly the generated documented options information is checked for error, in particular the consistency options (X_{K}) are checked for consistency.

12. The method according to claim 10, **characterized in that** the options information is generated in the program code, whereby the options information is evaluated by additional compiler instructions during the compiling of the program code to the executable control program (2) by the compiler and thereby the options are checked, particularly with respect to the consistency of preset values (x) in the case of consistency options (X_{K}).

13. The method according to one of claims 1 to 12, **characterized in that** at least one option (X), its value (x), and optionally its classification (constant, default, consistency option) are stored together with the graphical model (S₀) in at least one model file, and/or that at least one option (X), its value (x), and optionally its classification (constant, default, consistency option) are stored in a separate database and associated there with the particular submodel (Sⱼ).

14. The method according to one of claims 1 to 13, **characterized in that** at least one option (X) influences directives for the memory layout in the generated program code and/or the memory layout of the control program (2), particularly with consideration of the memory regions and/or the processor unit of the control system.

15. The method according to one of claims 1 to 14, **characterized in that** at least one option (X) adapts the generated program code to the processor unit of the control system (3), particularly to the bit width thereof.

## Revendications

1. Procédé de génération assistée par ordinateur d'au moins une partie d'un programme de commande exécutable (2), en particulier d'un programme de mesure, de commande, de régulation et/ou de calibrage, pour la commande d'un système de commande (3) avec au moins une unité de calcul électronique (4), sachant que la fonctionnalité du programme de commande (2) est décrite au moins partiellement dans au moins un modèle graphique (S₀) et le modèle graphique (S₀) est hiérarchisé en niveaux hiérarchiques en sous-modèles (Sᵢ), sachant qu'un sous-modèle (Sᵢ) d'un niveau hiérarchique peut être imbriqué, subdivisé en sous-modèles (Sᵢ) d'un niveau hiérarchique plus bas, sachant que des valeurs (x) pour des options (X) pour la traduction du modèle graphique (S₀) en un code de programme sont allouées et un code de programme est généré avec l'assistance d'un calculateur compte tenu des valeurs (x) des options (X) à partir du modèle (S₀) et le code de programme est également traduit en le programme de commande exécutable (2),
**caractérisé en ce que**
des valeurs (xⱼ) pour des options (X) pour la traduction du modèle graphique (S₀) sont allouées pour au moins deux sous-modèles imbriqués (Sⱼ) de niveaux hiérarchiques différents, et les valeurs (xⱼ) pour les options (X) sont prises en compte lors de la génération assistée par ordinateur du code de programme pour chaque sous-modèle (Sⱼ),
sachant qu'une option (X) du sous-modèle (Sⱼ) au niveau hiérarchique plus bas, qui n'est pas dotée d'une valeur (xⱼ), reprend la valeur (xⱼ) de l'option (X) correspondante du sous-modèle (Sⱼ) du niveau hiérarchique plus haut.

2. Procédé selon la revendication 1, **caractérisé en ce qu'**une valeur allouée (xⱼ) pour une option (X) du niveau hiérarchique plus bas a la priorité sur la valeur allouée (xⱼ) pour l'option correspondante (X) du niveau hiérarchique plus haut.

3. Procédé selon la revendication 1 ou 2, **caractérisé en ce que** pour une valeur allouée (xⱼ) pour une option (X) pour un sous-modèle (Sⱼ) à un niveau hiérarchique, on alloue le nombre de ses niveaux hiérarchiques plus bas consécutifs, auxquels la valeur allouée (xⱼ) pour l'option (X) concernée est prioritaire, en particulier, sachant qu'après ce nombre de niveaux hiérarchiques plus bas, la valeur (x) pour l'option concernée (X) reprend la valeur (x) du niveau hiérarchique plus haut.

4. Procédé selon l'une des revendications 1 à 3, **caractérisé en ce qu'**une valeur allouée (xⱼ) pour une option (X) pour un sous-modèle (Sⱼ) à un niveau hiérarchique et/ou pour une option pour le modèle (S₀) au niveau hiérarchique le plus haut est marquée comme invariable (option de constance), si bien que la valeur (xⱼ) pour cette option (X) ne peut plus être modifiée à un niveau hiérarchique plus bas, en particulier, même dans le cas où une valeur (xⱼ) différente est fixée ou a été fixée pour l'option (X) correspondante à un niveau hiérarchique plus bas.

5. Procédé selon l'une des revendications 1 à 4, **caractérisé en ce qu'**une option par défaut (X_{D}) est déterminée pour la traduction du modèle graphique (So) en code de programme et une valeur par défaut (x_{D}) est allouée, qui est en particulier utilisée en tant que valeur par défaut pour l'option correspondante (X) du modèle (S₀) au niveau hiérarchique le plus haut dans le cas où la valeur (x) de l'option correspondante (X) n'est pas déterminée dans le modèle graphique (S₀).

6. Procédé selon l'une des revendications 1 à 5, **caractérisé en ce qu'**au moins une option (X) pour un sous-modèle (Sⱼ) à un niveau hiérarchique et/ou au moins une option (X) pour le modèle (S₀) au niveau hiérarchique le plus haut et/ou au moins une option par défaut (Xⱼ) est (sont) marquée(s) en tant qu'option (X) devant être dotée d'une valeur (x) à un niveau hiérarchique plus bas, sachant qu'un message d'erreur/d'avertissement est émis si l'option (X) afférente n'a pas été dotée d'une valeur (x) à un niveau hiérarchique plus bas au moment de la traduction du modèle graphique (S₀) en code de programme.

7. Procédé selon l'une des revendications 1 à 6, **caractérisé en ce qu'**au moins une option (X) pour un sous-modèle (Sⱼ) à un niveau hiérarchique et/ou au moins une option (X) pour le modèle (S₀) au niveau hiérarchique le plus haut et/ou au moins une option par défaut est (sont) marquée(s) en tant qu'option de cohérence (X_{K}), sachant qu'il est vérifié au plus tard au moment de la traduction du modèle graphique (S₀) en code de programme, si les valeurs (x) pour l'option de cohérence (X_{K}) sont définies de manière cohérente à tous les niveaux hiérarchiques des sous-modèles imbriqués concernés (Sⱼ), sachant en particulier qu'en cas d'identification d'une incohérence, un message au moins, de préférence un message d'erreur ou d'avertissement, est émis.

8. Procédé selon la revendication 7, **caractérisé en ce qu'**en cas d'identification d'une incohérence, la traduction du modèle graphique (S₀) en code de programme est interrompue ou que le modèle (S₀) ou le sous-modèle (Sⱼ) contenant l'incohérence est traduit en un code de programme invalidé.

9. Procédé selon la revendication 7, **caractérisé en ce qu'**en cas d'identification d'une option de cohérence (X_{K}) dotée de valeurs incohérentes, la valeur (x) allouée au niveau hiérarchique le plus haut pour l'option de cohérence (X_{K}) est automatiquement allouée également en tant que valeur par défaut (x) pour les sous-modèles imbriqués (Sᵢ) au niveau hiérarchique plus bas.

10. Procédé selon l'une des revendications 1 à 9, **caractérisé en ce que** le nom et la valeur (x) d'au moins une option (X) sont documentés de surcroît avec l'information sur l'origine de la valeur (x) de cette option (X) en tant qu'information d'option, en particulier, l'information d'option est générée dans la partie correspondante du code de programme, sachant qu'il est de préférence indiqué en tant qu'information d'origine si l'option (X) et/ou la valeur de l'option a/ont été allouée(s) localement dans le sous-modèle concerné (Sⱼ), ou si l'option (X) et/ou la valeur (x) de l'option (X) a/ont été (s) repris dans le sous-modèle concerné (Sⱼ) depuis un sous-modèle (Sⱼ) de niveau hiérarchique plus haut, ou si l'option (X) et/ou la valeur (x) de l'option (X) a/ont été définie(s) dans le sous-modèle concerné (Sⱼ) par une allocation par défaut.

11. Procédé selon la revendication 10, **caractérisé en ce que** l'information d'option documentée est générée séparément de la traduction du modèle graphique (So) en code de programme, en particulier, qu'il est effectué un contrôle d'erreurs de l'information d'option documentée générée, en particulier, qu'il est effectué un contrôle de cohérence des options de cohérence (X_{K}).

12. Procédé selon la revendication 10, **caractérisé en ce que** l'information d'option est générée dans le code de programme, sachant que l'information d'option est évaluée par des instructions de traducteur supplémentaires lors de la traduction, par le traducteur, du code de programme en programme de commande exécutable (2) et les options sont ainsi vérifiées, en particulier en ce qui concerne la cohérence de valeurs allouées (x) en cas d'options de cohérence (X_{K}).

13. Procédé selon l'une des revendications 1 à 12, **caractérisé en ce qu'**au moins une option (X), sa valeur (x) et, le cas échéant, sa classification (option de constance, par défaut, de cohérence) sont mémorisées avec le modèle graphique (S₀) dans au moins un fichier de modèle, et/ou qu'au moins une option (X), sa valeur (x) et, le cas échéant, sa classification (option de constance, par défaut, de cohérence) sont stockées dans une base de données séparée et y sont associées avec le sous-modèle respectif (Sⱼ).

14. Procédé selon l'une des revendications 1 à 13, **caractérisé en ce qu'**au moins une option (X) influence des directives sur l'architecture de la mémoire dans le code de programme généré et/ou l'architecture de la mémoire du programme de commande (2), en particulier compte tenu des zones de mémoire et/ou de l'unité de calcul du système de commande.

15. Procédé selon l'une des revendications 1 à 14, **caractérisé en ce qu'**au moins une option (X) adapte le code de programme généré à l'unité de calcul du système de commande (3), en particulier à sa largeur de bits.
